# EUROPEAN PATENT SPECIFICATION

(11) **EP 2 337 133 B1**
(45) Date of publication and mention of the grant of the patent: **25.05.2016**
(21) Application number: 10180737.8
(22) Date of filing: 28.09.2010
(51) Int. Cl.: H01M 8/02, H01M 8/24

(54) **Fluid flow plate assemblies**
Fluidverteileranordnungen
Arrangements de plaques d'écoulement de fluide

(30) Priority: 07.12.2009 US 267387 P; 12.02.2010 TW 99104646
(43) Date of publication of application: 22.06.2011
(73) Proprietor: Industrial Technology Research Institute, Chutung, Hsinchu 31040 (TW)
(72) Inventor: Chen, Chi-Chang, 513, Taiwan, Changhua County (TW); Shiu, Huan-Ruei, 883, Taiwan, Penghu County (TW); Jung, Shiqah-Ping, 327, Taiwan, Taoyuan County (TW); Tsau, Fanghei, 802, Taiwan, Kaohsiung City (TW); Chang, Wen-Chen, 310, Taiwan, Hsinchu County (TW)
(74) Representative: Gulde & Partner

(56) References cited:
- WO-A1-97/33331
- US-A- 5 514 487
- US-A1- 2006 269 821
- US-A1- 2007 172 711
- US-A1- 2007 292 740
- US-A1- 2009 075 153

## Description

### CROSS REFERENCE TO RELATED APPILCATIONS

This Application claims priority from U.S. provisional application no. 61/267,387. This Application further claims priority of Taiwan Patent Application No. 099104646, filed on February 12, 2010.

### BACKGROUND

### Technical Field

This application relates generally to fluid flow plate assemblies and fuel cell devices having fluid flow plate assemblies.

### Description of the Related Art

Fluid flow plates are structures that are designed for fluid-related applications, such as for carrying, delivering, dividing, and/or distributing one or more types of fluids. The term "fluid" is used here in a broad sense, which can be anything that is capable of flowing from one point to another. For example, a fluid may include air, gas, liquid, viscous fluid, etc., each of which is capable of flowing or moving itself or a part of it from one point to another.

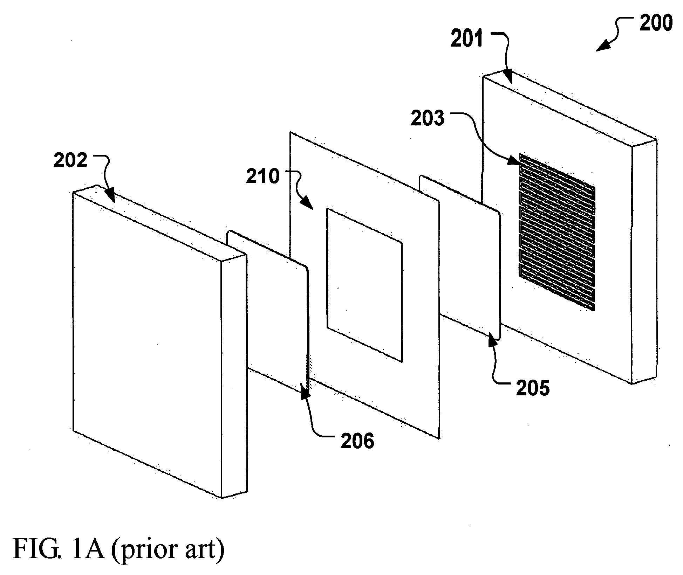

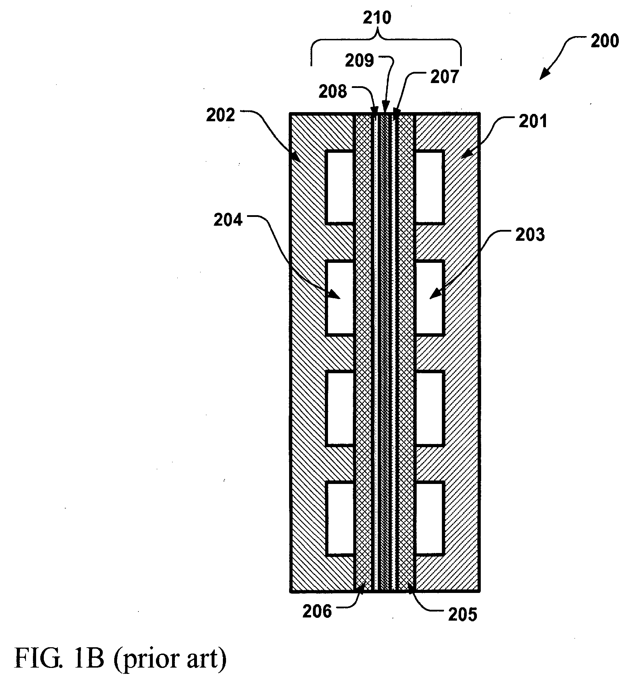

As an illustrative example, one of the many uses for fluid flow plates is fuel cell applications, in which fluid flow plates may be used to transport, guide, and/or distribute one or more kinds of "fuel", which may be in a liquid or gaseous form, for generating electric power. FIG. 1A illustrates a perspective diagram of an example of a fuel cell in the prior art that uses fluid flow plates for its fuel distribution. FIG. 1B illustrates the cross-section of the fuel cell in FIG. 1A.

Referring to FIGs. 1A and 1B, a single fuel cell 200, such as a Proton Exchange Membrane Fuel Cell (also known as "PEMFC"), may include a membrane electrode assembly 210, two gas diffusion layers 205 and 206, and two fluid flow plates 201 and 202. As illustrated, the two gas diffusion layers 205 and 206 may sandwich the membrane electrode assembly 210 between them, and the two fluid flow plates 201 and 202 may sandwich between them both the membrane electrode assembly 210 and the two gas diffusion layers 205 and 206. The fluid flow plates 201 and 202 each may provide one or more flow channels, such as flow channels 203 and 204 in FIG. 1B, and a reactant fluid may flow through each of the flow channels. As an example, the membrane electrode assembly 210 may include a proton exchange membrane 209, an anode catalyst layer 207, and a cathode catalyst layer 208. The anode and cathode catalyst layers 207 and 208 each may include platinum or platinum alloy, which may serve as a catalyst and facilitate electrochemical fuel cell reactions.

To facilitate the efficiency or ease of fluid distribution or that of an accompanying components, such as a fuel cell device, it may be desirable to provide fluid flow plates that may increase the ease of flow movement or distribution, decrease flow resistance, simplify system or component design, or provide different fluid flow characteristics.

### SUMMARY

According to the invention as defined in claim 1, a fluid flow plate assembly includes a first manifold, a second manifold, and at least one fluid flow channel coupled between the first manifold and the second manifold. The first manifold has a fluid inlet for receiving an incoming fluid and extends along a first direction to provide a channel for transporting the incoming fluid partially along the first direction. The first manifold has at least one distribution outlet in at least a portion of a sidewall region of the first manifold and releases at least one portion of the incoming fluid as a released fluid through the at least one distribution outlet serving as opening occupying an angle of 70 to 85 degrees along a circumferential section of a round cross section of the first manifold, the angle being defined with respect to a reference point of 0 degree set at the bottom point of the round cross section of the first manifold. The second manifold has a fluid outlet for discharging a discharged fluid, the discharged fluid comprising at least one portion of the incoming fluid and extends along a second direction to provide a channel for transporting the discharged fluid partially along the second direction. The second manifold receives the discharged fluid through at least one discharged fluid inlet on the second manifold. The at least one fluid flow channel is coupled between at least one of the at least one distribution outlet and at least one of the at least one discharged fluid inlet for distributing at least one portion of the released fluid. The at least one fluid flow channel has multiple channel sections extending in at least two directions and extending substantially along a fluid distribution plane. The at least one portion of the released fluid may flow through the at least one fluid flow channel and to the at least one of the at least one discharged fluid inlet as at least one portion of the discharged fluid, Both the first and second directions are substantially parallel with the fluid distribution plane.

In one embodiment, a fuel cell system has at least one fluid flow plate assembly as defined in claim 1. The at least one fluid flow channel is coupled with an exchange membrane electrode of the fuel cell system, Both the first and second directions are substantially parallel with the fluid distribution plane.

### BRIEF DESCRIPTION OF DRAWINGS

The embodiments disclosed herein can be more fully understood by reading the subsequent detailed description and examples with references made to the accompanying drawings, wherein:
FIG. 1A illustrates a perspective diagram of an example of a fuel cell in the prior art;
FIG. 1B illustrates a sectional view of the fuel cell in FIG. 1A;
FIG. 2A illustrates a perspective diagram of an exemplary fluid flow plate assembly in one embodiment;
FIG. 2B illustrates a sectional view of the fluid flow plate in FIG. 2A in a direction along fluid flow channels;
FIG. 2C illustrates a sectional view of a first manifold in the fluid flow plate assembly in FIG. 2A;
FIG. 3A illustrates a perspective diagram of an exemplary fluid flow plate assembly in another embodiment;
FIG. 3B illustrates a sectional view of the fluid flow plate assembly in FIG. 3A in a direction along fluid flow channels;
FIG. 3C illustrates a perspective diagram of a fluid flow plate assembly according to another embodiment;
FIG. 4A illustrates a perspective diagram of an exemplary fluid flow plate assembly according to further another embodiment;
FIG. 4B illustrates a side view of the fluid flow plate assembly in FIG. 4A; and
FIG. 4C illustrates a perspective diagram of an exemplary fluid flow plate assembly according to still another embodiment.

### DETAILED DESCRIPTION

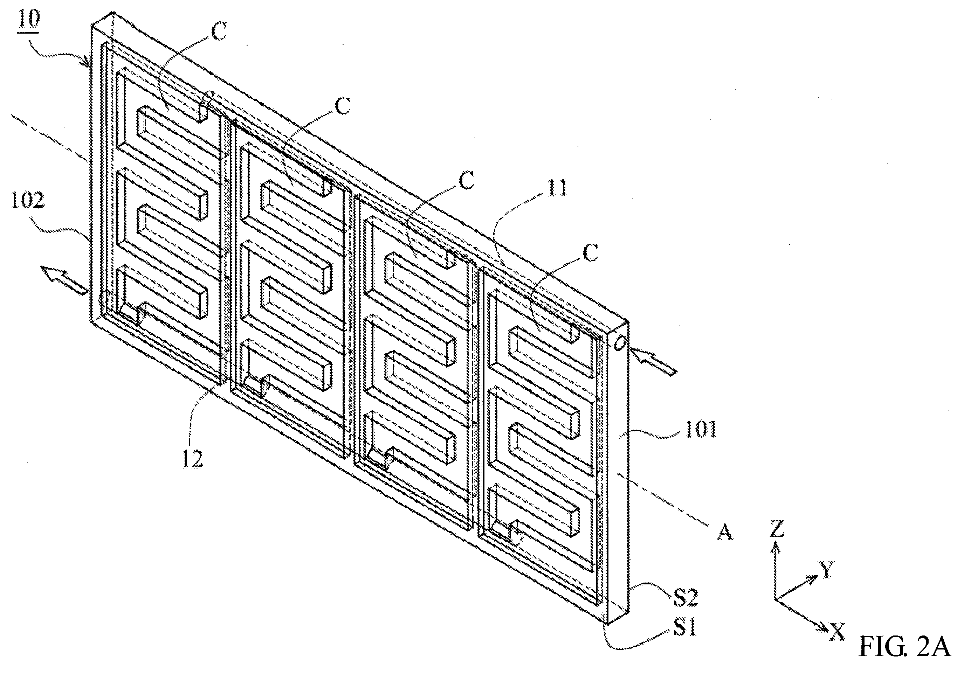

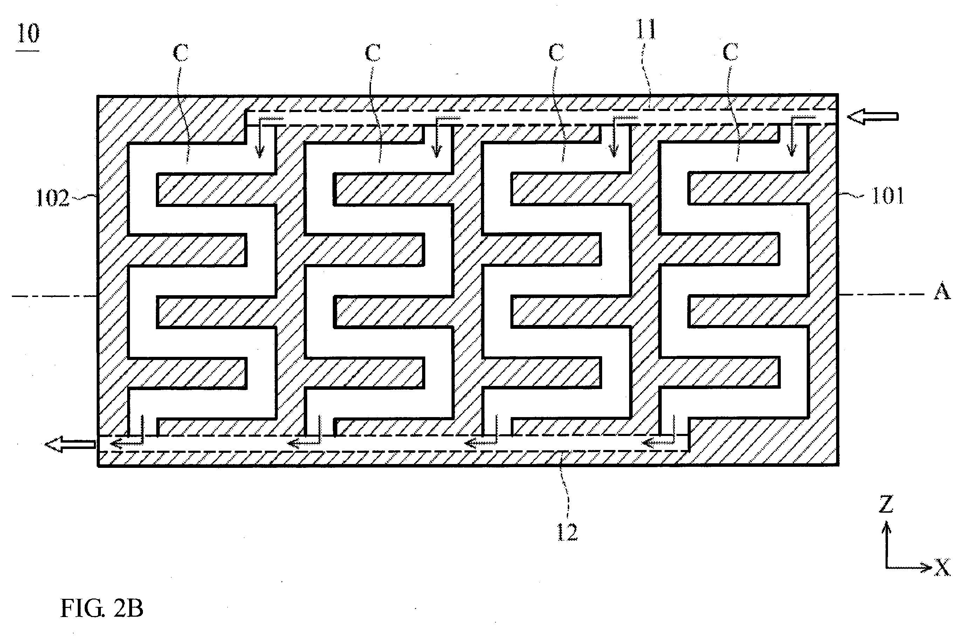

FIG. 2A illustrates a perspective diagram of an exemplary fluid flow plate assembly in one embodiment, and FIG. 2B illustrates a sectional view of the fluid flow plate in FIG. 2A in a direction along fluid flow channels. Referring to FIGs. 2A and 2B, an exemplary fluid flow plate assembly 10 may be used in or be part of a fuel cell system. Although a generally rectangular or rectangular-like structure is illustrated in FIGs. 2A and 2B, the fluid flow plate assembly 10 may be constructed in various shapes, dimensions, and designs depending on its applications. The fluid flow plate assembly 10 may include one or several flow channels C exposed to a first side S1 thereof, and the flow channels C may have channel sections extending in different directions but extending substantially along a along a central axis or a fluid distribution plane, such as the axis or plane indicated by line A of the fluid flow plate 10. Furthermore, the fluid flow plate assembly 10 may include a first manifold 11 and a second manifold 12 formed in and communicating with the flow channels C.

As illustrated by the arrows in FIGs. 2A and 2B, a reactant/incoming fluid may enter the first manifold 11 from a first end 101, such as through a fluid inlet of the fluid flow plate assembly 10. Part of the incoming fluid may flow through one of the flow channels C, which provides a reaction area for the fluid released into the channel (released fluid), such as reaction area with an exchange membrane of a fuel cell system. The fluid may then be discharged through the second manifold 12, and the discharged fluid may leave the fluid flow plate assembly through a second end 102, which may be a fluid outlet of the fluid flow plate assembly 10.

In one embodiment, the fluid flow plate assembly 10 may include the first manifold 11, the second manifold 12, and one or more fluid flow channels coupled between the first manifold 11 and the second manifold 12. The first manifold 11 has its fluid inlet for receiving the incoming fluid and extends along a first direction (such as the direction indicated by the arrow at the upper right in each of FIGs. 2A and 2B) to provide a channel for transporting the incoming fluid partially along the first direction. The second manifold 12 has its fluid outlet for discharging a discharged fluid, and the discharged fluid, as discussed above, may include a portion of the incoming fluid (or the entirety of the incoming fluid that has been reacted). The second manifold 12 may extend along a second direction (such as the direction indicated by the arrow at the lower left in each of FIGs. 2A and 2B) to provide a channel for transporting the discharged fluid partially along the second direction.

The second manifold 12 receives the discharged fluid through at least one discharged fluid inlet 14 on the second manifold 12. The fluid flow channels C, as illustrated in FIG. 2A, may be coupled between at least one of the distribution outlets, such as distribution outlet 15, of the first manifold 11 and at least one of the discharged fluid inlets, such as the discharged fluid inlet 14, of the second manifold 12 for distributing at least one portion of the released fluid from the first manifold. In one embodiment, the fluid flow channels C may have multiple channel sections extending in at least two directions and extending substantially along the fluid distribution plane, which is parallel with the line A illustrated in FIG. 2A. As a result, a portion of the released fluid may flow through the fluid flow channels C and through the distribution outlets to the second manifold 12 as the discharged fluid, As illustrated in FIG. 2A, both the first and second directions may be substantially parallel with the fluid distribution plane.

In one embodiment, the first and second manifolds 11 and 12 may be embedded in a fluid flow plate assembly. For example, the fluid flow plate assembly 10 may have the first and second manifolds 11 and 12 incorporated in the assembly, which can be manufactured as one or more molded pieces. The first and second manifolds 11 and 12 may extend substantially along (or substantially parallel to) the central axis or fluid distribution plane A. Flow resistance can be reduced in some embodiments to provide even or substantially even flow rates and/or to provide consistent or substantially consistent concentrations of the reactant fluid distributed. In some embodiments, increased consistency in flow rates or concentrations may improve the efficiency of fuel cell devices having the fluid flow plate assembly.

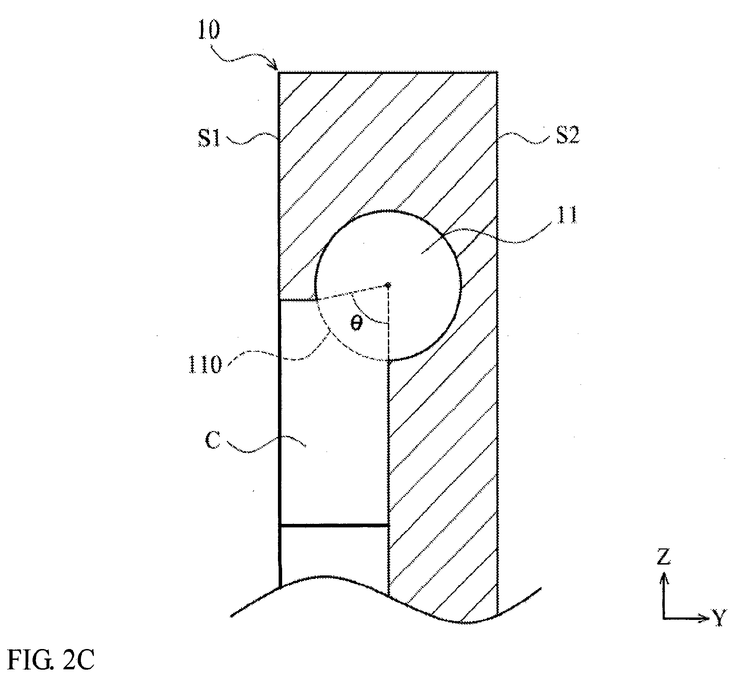

FIG. 2C illustrates a sectional view of a first manifold in the fluid flow plate assembly in FIG. 2A. Referring to FIG. 2C, the first manifold 11 has a round (or nearly round) cross section with an opening 110, which serves as a distribution outlet, in at least a portion of a sidewall region of the first manifold 11. The first manifold 11, therefore, may release some portion of the incoming fluid as a released fluid through the distribution outlet. The first manifold 11 has one or more openings 110 as a distribution outlet, and the opening 110 may occupy an angle of 70 to 85 degrees as defined below.

In one embodiment, the opening 110 may be formed on the lower-left side thereof and may communicate with one or more flow channels C. A reference point of 0 degree is set at the bottom point of the first manifold 11 with respect to the center point of a cross section of the first manifold 11. As shown in FIG. 2C, the opening 110 occupies an angle range θ of close to 90 degrees (such as about 75, 80, or 85 degrees) and opens from the point of about 0 degree (bottom point) to about 70 to 85 degrees. If a similar opening is made at the lower-right quarter of the round cross section, the opening 110 would extend from the point of about 0 degree (bottom point) to about -70 to -85 degrees. Similarly, the second manifold 12 may have a round cross section with an opening, which may serve as the discharged fluid inlet 14, in at least a portion of a sidewall region of the second manifold 12. In one embodiment, the opening may be occupying an angle position from about -90 degrees (3 o'clock position) to -180 degrees (12 o'clock position) with respect to the center of the cross section of the second manifold, such as the configuration shown in FIG. 2A. In some embodiments not being part of the invention, the opening in each manifold may occupy any angle range within the range of about 0 to about 180 degrees of a section of the manifold with respect to the center of a cross section of the manifold.

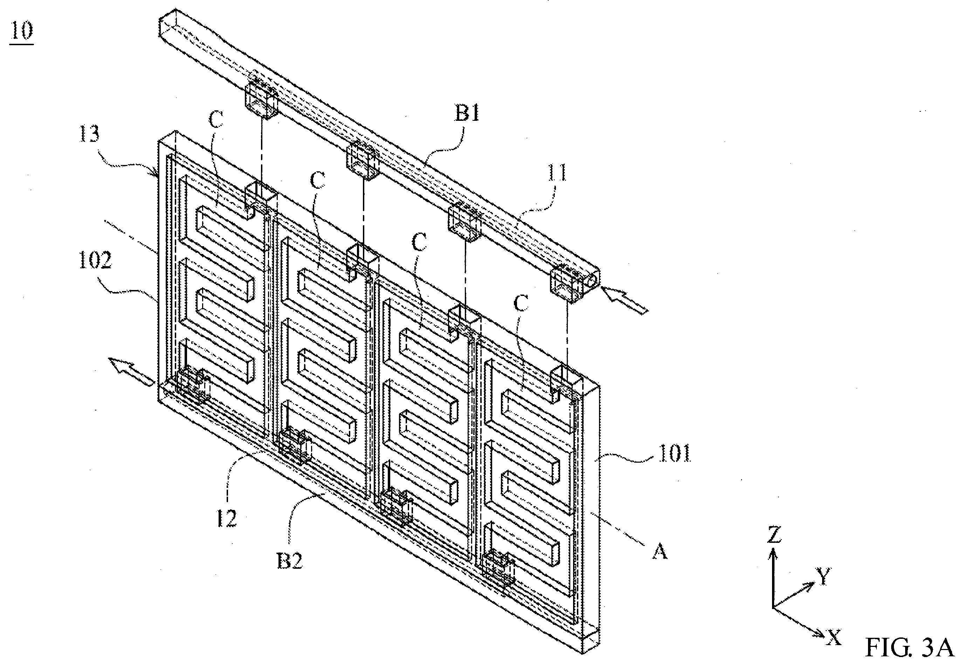

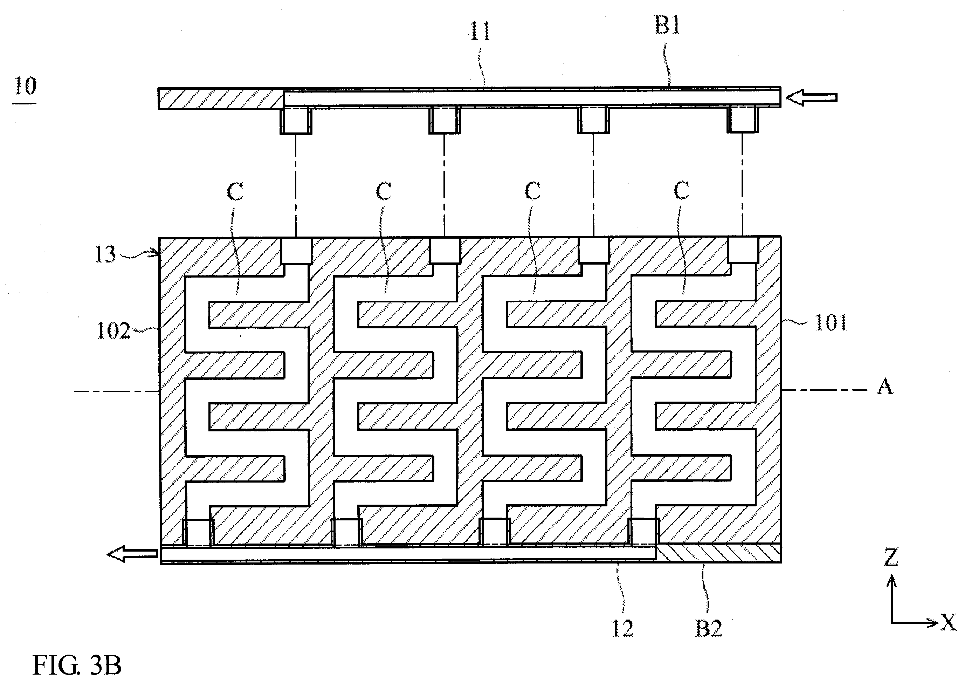

In one embodiment, the fluid flow plate 10 may be a combination of one, two, or more components. FIG. 3A illustrates a perspective diagram of an exemplary fluid flow plate assembly in another embodiment, and FIG. 3B illustrates a sectional view of the fluid flow plate assembly in FIG. 3A in a direction along fluid flow channels. Referring to FIGs. 3A and 3B, the fluid flow plate 10 may include a main body 13, a first manifold member B1 and a second manifold member B2. The main body 13 may include one or several flow channels C formed on its side. The first and second manifolds 11 and 12 may be respectively embedded in the first and second members B1 and B2. As shown in FIGs. 3A and 3B, the first and second members B1 and B2 may have a substantially longitudinal shape and are, respectively, coupled with or attached to the main body 13 on the top and bottom sides, so that the flow channels C may communicate with the first and second manifolds 11 and 12. In this embodiment, the reactant fluid can flow through the fluid flow plate 10 via the flow channels C and the first and second manifolds 11 and 12.

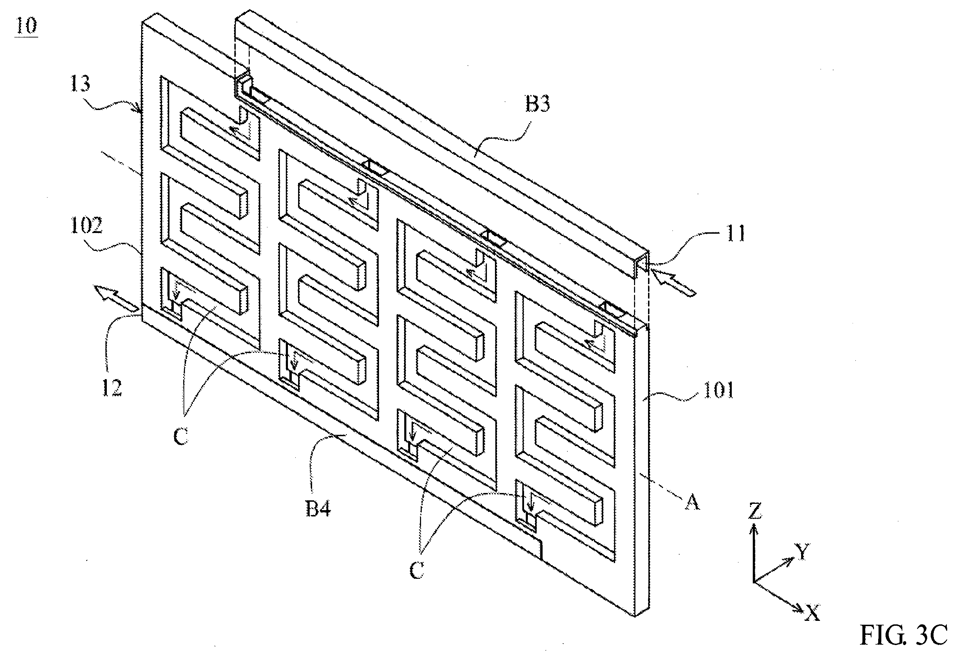

The first and second manifold members B1 and B2 of FIGs. 3A and 3B may be replaced by the first and second manifold members B3 and B4 shown in FIG. 3C. In this embodiment, the first and second members B3 and B4 have a U-shaped cross section providing the end (top or bottom) wall and the two side walls. While a rectangular cross-section for the two manifolds is illustrated in FIG. 3C, each manifold may have a round cross-section as illustrated earlier. The first and second members B3 and B4 and may be respectively coupled with or attached to the main body 13 on the top and bottom sides, whereby the first and second manifolds 11 and 12 are formed in the fluid flow plate 10. As the arrows in FIG. 3C indicate, the reactant fluid enters the first manifold 11 from a first end 101 of the fluid flow plate 10 and flows through the flow channels C to the second manifold 12. Subsequently, the reactant fluid is discharged from a second end 102 of the fluid flow plate 10 via the second manifold 12.

In other words, a main body may include one or more fluid flow channels, a first manifold member may include the first manifold and one or more distribution outlets, and a second manifold member may include the second manifold and one or more discharged fluid inlets. In one embodiment, the main body is coupled between the first and second manifold members. For example, the first and second manifold members may be placed on two opposite sides of the main body. The first and second manifold members each may have a substantially longitudinal shape, and the main body has a substantially planar shape. Alternatively, some of the distribution outlets and discharged fluid inlets, rather than being placed in the first and second manifold members, may be placed in a main body. In other words, the main body may include one or more fluid flow channels, one or more distribution outlets, and/or one or more discharged fluid inlets.

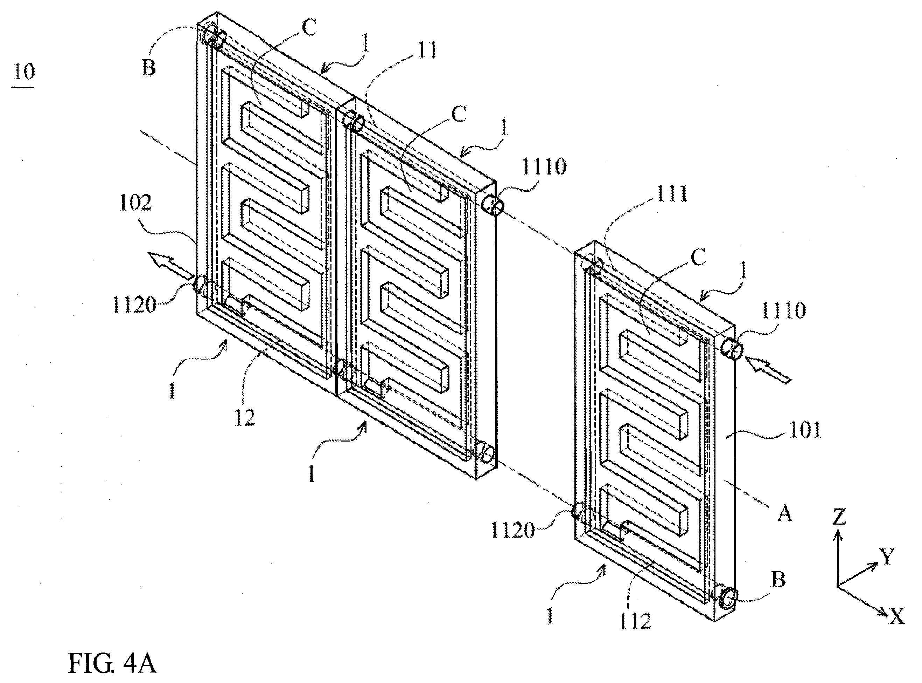

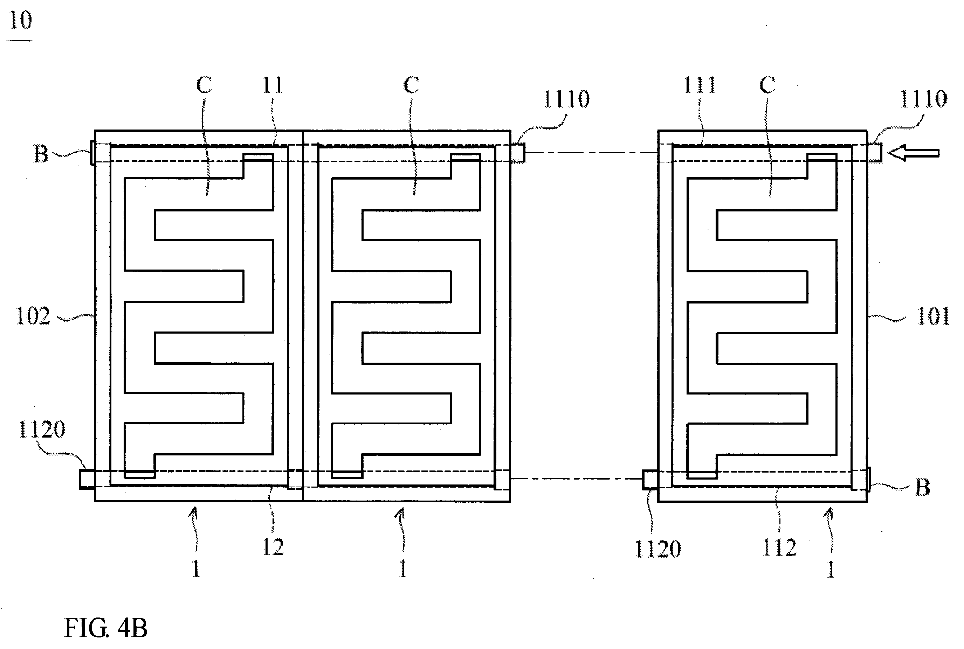

Referring to FIGs. 4A and 4B, another embodiment of the fluid flow plate 10 is configured by a plurality of fluid flow plate units 1. Two or more fluid flow plate units 1 may be arranged along the central axis A (or the direction in which the first manifold 11 extends), and each of the fluid flow plate units 1 may have at least one flow channel C exposed at one side of the flow channel C for purposes of fuel cell reactions. The first manifold 11 and the second manifold 12 each may have multiple sections or passages. As shown in FIGs. 4A and 4B, each of the fluid flow plate units 1 further has a first passage 111 and a second passage 112 extending therethrough. The first passages 111 of the adjacent fluid flow plate units 1 are connected to each other, and correspondingly, the second passages 112 of the adjacent fluid flow plate units 1 are connected to each other. Thus, a plurality of the first and second passages or sections 111 and 112 can, respectively, comprise the first and second manifolds 11 and 12 extending through the fluid flow plate 10.

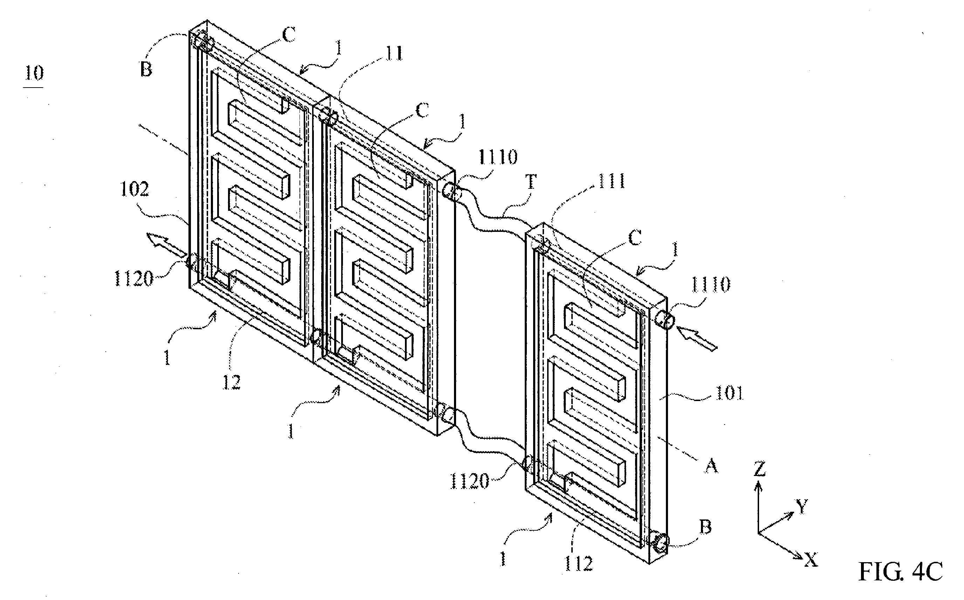

Specifically, the fluid flow plate 10 in FIGs. 4A and 4B comprises two plugs B disposed on the first and second ends 101 and 102, so as to seal an opening at one end of each of the first and second manifolds 11 and 12 and prevent leakage of the reactant fluid. Additionally, the fluid flow plate 10 further comprises a first protrusion 1110 and a second protrusion 1120, respectively, connecting the first and second passages 111 and 112 of the adjacent fluid flow plate units 1. Referring to FIG. 4C, the first and second passages 111 and 112 of the adjacent fluid flow plate units 1 may also be connected by flexible tubes T, so as to form the fluid flow plate 10 with a plurality of flow channels C.

The present application provides a fluid flow plate assembly of a planar fuel cell device. The fluid flow plate assembly is defined by claim 1 and includes at least a flow channel exposed at its side thereof, and a first manifold and a second manifold that communicate with the flow channel via transfer of a fluid. A reactant fluid may enter the first manifold from a first end of the fluid flow plate and flow through the flow channel to the second manifold. Subsequently, the reactant (or reacted) fluid may be discharged from a second end of the fluid flow plate via the second manifold. According to the invention, because the first and second manifolds are embedded in or integrated with the fluid flow plate assembly, flow resistance can be efficiently reduced to facilitate fluid transfer through the fluid flow plate. Furthermore, inconsistently distributed concentrations of the reactant liquid within the fluid flow plate assembly (or across flow channels) can be avoided or reduced to improve efficiency of a fuel cell device.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A fluid flow plate assembly, comprising:
a first manifold having a fluid inlet for receiving an incoming fluid, the first manifold extending along a first direction and providing a channel for transporting the incoming fluid partially along the first direction, the first manifold having at least one opening formed with respect to at least a portion of a sidewall region of the first manifold, the at least one opening forming at least one distribution outlet of the first manifold,
wherein the first manifold releases at least one portion of the incoming fluid as a released fluid through the at least one distribution outlet, the opening of the first manifold corresponding to an angle of 70 to 85 degrees along a circumferential section of a round cross section of the first manifold, the angle being defined with respect to a reference point of 0 degree set at a bottom point and the center point of the round cross section of the first manifold;
a second manifold having a fluid outlet for discharging a discharged fluid, the discharged fluid comprising at least one portion of the incoming fluid, the second manifold extending along a second direction and providing a channel for transporting the discharged fluid partially along the second direction, wherein the second manifold receives at least one portion of the discharged fluid through at least one discharged fluid inlet on the second manifold,;
at least one fluid flow channel coupled between the first manifold and the second manifold and between at least one of the at least one distribution outlet and at least one of the at least one discharged fluid inlet for distributing at least one portion of the released fluid, the at least one fluid flow channel having multiple channel sections extending in at least two directions and extending substantially along a fluid distribution plane, the at least one portion of the released fluid flowing through the at least one fluid flow channel and to the at least one of the at least one discharged fluid inlet as at least one portion of the discharged fluid,
wherein the first direction is substantially parallel with the fluid distribution plane, and the second direction is substantially parallel with the fluid distribution plane.

2. The fluid flow plate assembly of claim 1, wherein the at least one fluid flow channel is coupled with a fuel cell device, to generate electric power from a reaction with the at least one portion of the released fluid.

3. The fluid flow plate assembly of claim 1, further comprising:
a main body including at least one of the at least one fluid flow channel in the main body,
a first manifold member including the first manifold and the at least one distribution outlet in the first manifold member; and
a second manifold member including the second manifold and the at least one discharged fluid inlet in the second manifold member,
wherein the main body is coupled between the first and second manifold members.

4. The fluid flow plate assembly of claim 3, wherein the first and second manifold members each has a substantially longitudinal shape and a substantially round cross-section, the main body has a substantially planar shape, and the first and second manifold members are placed on opposite sides of the main body.

5. The fluid flow plate assembly of claim 1, further comprising:
a main body including at least one of the at least one fluid flow channel and at least one of the at least one distribution outlet and the at least one discharged fluid inlet in the main body,
a first manifold member including the first manifold in the first manifold member; and
a second manifold member including the second manifold in the second manifold member,
wherein the main body is coupled between the first and second manifold members.

6. The fluid flow plate assembly of claim 5, wherein the first and second manifold members each has a substantially longitudinal shape and a substantially round cross-section, the main body has a substantially planar shape, and the first and second manifold members are placed on opposite sides of the main body.

7. The fluid flow plate assembly of claim 1, wherein the at least one fluid flow channel comprises a plurality of fluid flow channels, and at least some of the plurality of fluid flow channels are arranged partially along the first direction and substantially along the fluid distribution plane.

8. The fluid flow plate assembly of claim 1, wherein a portion of the first manifold comprises at least one tubular extension coupled between two sections of the first manifold.

9. The fluid flow plate assembly of claim 1, wherein the second manifold receives at least one portion of the discharged fluid through the at least one discharged fluid inlet in at least a portion of a sidewall region of the second manifold.

10. A fuel cell system having at least one fluid flow plate assembly, the fluid flow plate assembly comprising:
a first manifold having a fluid inlet for receiving an incoming fluid, the first manifold extending along a first direction and providing a channel for transporting the incoming fluid partially along the first direction, the first manifold having at least one opening formed in at least a portion of a sidewall region of the first manifold, the at least one opening forming a least one distribution outlet of the first manifold,
wherein the first manifold releases at least one portion of the incoming fluid as a released fluid through the at least one distribution outlet, the opening on the first manifold corresponding to an angle of 70 to 85 degrees along a circumferential section of a round cross section of the first manifold, the angle being defined with respect to a reference point of 0 degree set at a bottom point and the center point of the round cross section of the first manifold;
a second manifold having a fluid outlet for discharging a discharged fluid, the discharged fluid comprising at least one portion of the incoming fluid, the second manifold extending along a second direction and providing a channel for transporting the discharged fluid partially along the second direction, the second manifold receiving the discharged fluid through at least one discharged fluid inlet on the second manifold;
at least one fluid flow channel coupled between the first manifold and the second manifold and between at least one of the at least one distribution outlet and at least one of the at least one discharged fluid inlet for distributing at least one portion of the released fluid, the at least one fluid flow channel having multiple channel sections extending in at least two directions and extending substantially along a fluid distribution plane, the at least one portion of the released fluid flowing through the at least one fluid flow channel and to the at least one of the at least one discharged fluid inlet as at least one portion of the discharged fluid, the at least one fluid flow channel being coupled with an exchange membrane electrode of the fuel cell system,
wherein the first direction is substantially parallel with the fluid distribution plane, and the second direction is substantially parallel with the fluid distribution plane.

11. The fuel cell system of claim 10, further comprising a gas diffusion layer coupled between the exchange membrane and each fluid flow channel.

12. The fuel cell system of claim 10, further comprising two catalyst layers, two gas diffusion layer, and two fluid flow channels at opposite sides of the exchange membrane to generate electric power from a reaction of two gases flown through the two fluid flow channels.

13. The fuel cell system of claim 10, the fluid flow plate assembly further comprising:
a main body including at least one of the at least one fluid flow channel in the main body,
a first manifold member including the first manifold and the at least one distribution outlet in the first manifold member; and
a second manifold member including the second manifold and the at least one discharged fluid inlet in the second manifold member,
wherein the main body is coupled between the first and second manifold members.

14. The fuel cell system of claim 10, the fluid flow plate assembly further comprising:
a main body including at least one of the at least one fluid flow channel and at least one of the at least one distribution outlet and the at least one discharged fluid inlet in the main body,
a first manifold member including the first manifold in the first manifold member; and
a second manifold member including the second manifold in the second manifold member,
wherein the main body is coupled between the first and second manifold members.

15. The fuel cell system of claim 10, wherein the at least one fluid flow channel comprises a plurality of fluid flow channels, and at least some of the plurality of fluid flow channels are arranged partially along the first direction and substantially along the fluid distribution plane.

16. The fuel cell system of claim 10, wherein the second manifold receives at least one portion of the discharged fluid through the at least one discharged fluid inlet in at least a portion of a sidewall region of the second manifold.

## Patentansprüche

1. Fluidverteileranordnung, umfassend:
einen ersten Verteiler mit einem Fluideinlass zur Aufnahme eines einströmenden Fluids, wobei der erste Verteiler sich entlang einer ersten Richtung erstreckt und einen Kanal zum teilweisen Transport des einströmenden Fluids entlang der ersten Richtung bereitstellt, wobei der erste Verteiler mindestens eine Öffnung hat, die bezüglich zumindest eines Abschnitts eines Seitenwandbereichs des ersten Verteilers ausgebildet ist, wobei die mindestens eine Öffnung mindestens einen Verteilungsauslass des ersten Verteilers bildet,
wobei der erste Verteiler mindestens einen Teil des einströmenden Fluids als freigesetztes Fluid durch den mindestens einen Verteilungsauslass freisetzt, wobei die Öffnung des ersten Verteilers einem Winkel von 70 bis 85 Grad entlang einem Umfangsabschnitt eines runden Querschnitts des ersten Verteilers entspricht, wobei der Winkel bezüglich eines Bezugspunkts von 0 Grad bestimmt ist, der auf einen unteren Punkt und den Mittelpunkt des runden Querschnitts des ersten Verteilers eingestellt ist,
einen zweiten Verteiler mit einem Fluidauslass zum Ablassen eines abgelassenen Fluids, wobei das abgelassene Fluid mindestens einen Teil des einströmenden Fluids umfasst, wobei der zweite Verteiler sich entlang einer zweiten Richtung erstreckt und einen Kanal zum teilweisen Transport des abgelassenen Fluids entlang der zweiten Richtung bereitstellt, wobei der zweite Verteiler mindestens einen Teil des abgelassenen Fluids durch mindestens einen Einlass für das abgelassene Fluid auf dem zweiten Verteiler aufnimmt,
mindestens einen Fluidstromkanal, der zwischen den ersten Verteiler und den zweiten Verteiler und zwischen mindestens einen des mindestens einen Verteilungsauslasses und mindestens einen des mindestens einen Einlasses für das abgelassene Fluid zur Verteilung mindestens eines Teils des freigesetzten Fluids gekoppelt ist,
wobei der mindestens eine Fluidstromkanal mehrere Kanalabschnitte hat, die sich in mindestens zwei Richtungen erstrecken und sich im Wesentlichen entlang einer Fluidverteilungsebene erstrecken, wobei der mindestens eine Teil des freigesetzten Fluids als mindestens ein Teil des abgelassenen Fluids durch den mindestens einen Fluidstromkanal und zu dem mindestens einen des mindestens einen Einlasses für das abgelassene Fluid strömt,
wobei die erste Richtung im Wesentlichen parallel zu der Fluidverteilungsebene verläuft und die zweite Richtung im Wesentlichen parallel zu der Fluidverteilungsebene verläuft.

2. Fluidverteileranordnung nach Anspruch 1, wobei der mindestens eine Fluidstromkanal mit einer Brennstoffzellenvorrichtung verbunden ist, um Elektroenergie aus einer Reaktion mit dem mindestens einen Teil des freigesetzten Fluids zu erzeugen.

3. Fluidverteileranordnung nach Anspruch 1, ferner umfassend:
einen Hauptkörper, der mindestens einen des mindestens einen Fluidstromkanals in dem Hauptkörper einschließt,
ein erstes Verteilerglied, das den ersten Verteiler und den mindestens einen Verteilungsauslass in dem ersten Verteilerglied einschließt, und
ein zweites Verteilerglied, das den zweiten Verteiler und den mindestens einen Einlass für das abgelassene Fluid in dem zweiten Verteilerglied einschließt,
wobei der Hauptkörper zwischen das erste und das zweite Verteilerglied gekoppelt ist.

4. Fluidverteileranordnung nach Anspruch 3, wobei das erste und das zweite Verteilerglied jeweils eine im Wesentlichen längliche Form und einen im Wesentlichen runden Querschnitt haben, der Hauptkörper eine im Wesentlichen ebene Form hat und das erste und das zweite Verteilerglied auf gegenüberliegenden Seiten des Hauptkörpers platziert sind.

5. Fluidverteileranordnung nach Anspruch 1, ferner umfassend:
einen Hauptkörper, der mindestens einen des mindestens einen Fluidstromkanals und mindestens einen des mindestens einen Verteilungsauslasses und den mindestens einen Einlass für das abgelassene Fluid in dem Hauptkörper einschließt,
ein erstes Verteilerglied, das den ersten Verteiler in dem ersten Verteilerglied einschließt, und
ein zweites Verteilerglied, das den zweiten Verteiler in dem zweiten Verteilerglied einschließt,
wobei der Hauptkörper zwischen das erste und das zweite Verteilerglied gekoppelt ist.

6. Fluidverteileranordnung nach Anspruch 5, wobei das erste und das zweite Verteilerglied jeweils eine im Wesentlichen längliche Form und einen im Wesentlichen runden Querschnitt haben, der Hauptkörper eine im Wesentlichen ebene Form hat und das erste und das zweite Verteilerglied auf gegenüberliegenden Seiten des Hauptkörpers platziert sind.

7. Fluidverteileranordnung nach Anspruch 1, wobei der mindestens eine Fluidstromkanal eine Mehrzahl von Fluidstromkanälen umfasst und zumindest einige der Mehrzahl von Fluidstromkanälen teilweise entlang der ersten Richtung und im Wesentlichen entlang der Fluidverteilungsebene angeordnet sind.

8. Fluidverteileranordnung nach Anspruch 1, wobei ein Abschnitt des ersten Verteilers mindestens eine röhrenförmige Verlängerung umfasst, die zwischen zwei Abschnitte des ersten Verteilers gekoppelt ist.

9. Fluidverteileranordnung nach Anspruch 1, wobei der zweite Verteiler mindestens einen Teil des abgelassenen Fluids durch den mindestens einen Einlass für das abgelassene Fluid in zumindest einem Abschnitt eines Seitenwandbereichs des zweiten Verteilers aufnimmt.

10. Brennstoffzellensystem mit mindestens einer Fluidverteileranordnung, wobei die Fluidverteileranordnung umfasst:
einen ersten Verteiler mit einem Fluideinlass zur Aufnahme eines einströmenden Fluids, wobei der erste Verteiler sich entlang einer ersten Richtung erstreckt und einen Kanal zum teilweisen Transport des einströmenden Fluids entlang der ersten Richtung bereitstellt, wobei der erste Verteiler mindestens eine Öffnung hat, die in zumindest einem Abschnitt eines Seitenwandbereichs des ersten Verteilers ausgebildet ist,
wobei die mindestens eine Öffnung mindestens einen Verteilungsauslass des ersten Verteilers bildet,
wobei der erste Verteiler mindestens einen Teil des einströmenden Fluids als freigesetztes Fluid durch den mindestens einen Verteilungsauslass freisetzt, wobei die Öffnung auf dem ersten Verteiler einem Winkel von 70 bis 85 Grad entlang einem Umfangsabschnitt eines runden Querschnitts des ersten Verteilers entspricht, wobei der Winkel bezüglich eines Bezugspunkts von 0 Grad bestimmt ist, der auf einen unteren Punkt und den Mittelpunkt des runden Querschnitts des ersten Verteilers eingestellt ist,
einen zweiten Verteiler mit einem Fluidauslass zum Ablassen eines abgelassenen Fluids, wobei das abgelassene Fluid mindestens einen Teil des einströmenden Fluids umfasst, wobei der zweite Verteiler sich entlang einer zweiten Richtung erstreckt und einen Kanal zum teilweisen Transport des abgelassenen Fluids entlang der zweiten Richtung bereitstellt, wobei der zweite Verteiler das abgelassene Fluid durch mindestens einen Einlass für das abgelassene Fluid auf dem zweiten Verteiler aufnimmt,
mindestens einen Fluidstromkanal, der zwischen den ersten Verteiler und den zweiten Verteiler und zwischen mindestens einen des mindestens einen Verteilungsauslasses und mindestens einen des mindestens einen Einlasses für das abgelassene Fluid zur Verteilung mindestens eines Teils des freigesetzten Fluids gekoppelt ist,
wobei der mindestens eine Fluidstromkanal mehrere Kanalabschnitte hat, die sich in mindestens zwei Richtungen erstrecken und sich im Wesentlichen entlang einer Fluidverteilungsebene erstrecken, wobei der mindestens eine Teil des freigesetzten Fluids als mindestens ein Teil des abgelassenen Fluids durch den mindestens einen Fluidstromkanal und zu dem mindestens einen des mindestens einen Einlasses für das abgelassene Fluid strömt, wobei der mindestens eine Fluidstromkanal mit einer Austauschmembranelektrode des Brennstoffzellensystems verbunden ist,
wobei die erste Richtung im Wesentlichen parallel zu der Fluidverteilungsebene verläuft und die zweite Richtung im Wesentlichen parallel zu der Fluidverteilungsebene verläuft.

11. Brennstoffzellensystem nach Anspruch 10, ferner umfassend eine Gasdiffusionsschicht, die zwischen die Austauschmembran und jeden Fluidstromkanal gekoppelt ist.

12. Brennstoffzellensystem nach Anspruch 10, ferner umfassend zwei Katalysatorschichten, zwei Gasdiffusionsschichten und zwei Fluidstromkanäle an gegenüberliegenden Seiten der Austauschmembran, um Elektroenergie aus einer Reaktion zwischen zwei Gasen, die durch die zwei Fluidstromkanäle strömen, zu erzeugen.

13. Brennstoffzellensystem nach Anspruch 10, wobei die Fluidverteileranordnung ferner umfasst:
einen Hauptkörper, der mindestens einen des mindestens einen Fluidstromkanals in dem Hauptkörper einschließt,
ein erstes Verteilerglied, das den ersten Verteiler und den mindestens einen Verteilungsauslass in dem ersten Verteilerglied einschließt, und
ein zweites Verteilerglied, das den zweiten Verteiler und den mindestens einen Einlass für das abgelassene Fluid in dem zweiten Verteilerglied einschließt,
wobei der Hauptkörper zwischen das erste und das zweite Verteilerglied gekoppelt ist.

14. Brennstoffzellensystem nach Anspruch 10, wobei die Fluidverteileranordnung ferner umfasst:
einen Hauptkörper, der mindestens einen des mindestens einen Fluidstromkanals und mindestens einen des mindestens einen Verteilungsauslasses und den mindestens einen Einlass für das abgelassene Fluid in dem Hauptkörper einschließt,
ein erstes Verteilerglied, das den ersten Verteiler in dem ersten Verteilerglied einschließt, und
ein zweites Verteilerglied, das den zweiten Verteiler in dem zweiten Verteilerglied einschließt,
wobei der Hauptkörper zwischen das erste und das zweite Verteilerglied gekoppelt ist.

15. Brennstoffzellensystem nach Anspruch 10, wobei der mindestens eine Fluidstromkanal eine Mehrzahl von Fluidstromkanälen umfasst und zumindest einige der Mehrzahl von Fluidstromkanälen teilweise entlang der ersten Richtung und im Wesentlichen entlang der Fluidverteilungsebene angeordnet sind.

16. Brennstoffzellensystem nach Anspruch 10, wobei der zweite Verteiler mindestens einen Teil des abgelassenen Fluids durch den mindestens einen Einlass für das abgelassene Fluid in zumindest einem Abschnitt eines Seitenwandbereichs des zweiten Verteilers aufnimmt.

## Revendications

1. Arrangement de plaques d'écoulement de fluide, comprenant :
un premier collecteur ayant une entrée de fluide pour recevoir un fluide entrant, le premier collecteur s'étendant le long d'une première direction et fournissant un canal pour transporter le fluide entrant partiellement le long de la première direction, le premier collecteur ayant au moins une ouverture formée par rapport à au moins une portion d'une région de paroi latérale du premier collecteur, l'ouverture au moins au nombre de un formant au moins une sortie de distribution du premier collecteur,
dans lequel le premier collecteur relâche au moins une portion du fluide entrant en tant que fluide relâché à travers la sortie de distribution au moins au nombre de un, l'ouverture du premier collecteur correspondant à un angle de 70 à 85 degrés le long d'un tronçon circonférentiel d'une section transversale ronde du premier collecteur, l'angle étant défini par rapport à un point de référence de 0 degré placé sur un point inférieur et au point central de la section transversale ronde du premier collecteur ;
un deuxième collecteur ayant une sortie de fluide pour décharger un fluide déchargé, le fluide déchargé comprenant au moins une portion du fluide entrant, le deuxième collecteur s'étendant le long d'une deuxième direction et fournissant un canal pour transporter le fluide déchargé partiellement le long de la deuxième direction, dans lequel le deuxième collecteur reçoit au moins une portion du fluide déchargé à travers au moins une entrée de fluide déchargé sur le deuxième collecteur ;
au moins un canal d'écoulement de fluide couplé entre le premier collecteur et le deuxième collecteur et entre au moins une de la sortie de distribution au moins au nombre de un et au moins une de l'entrée de fluide déchargé au moins au nombre de un pour distribuer au moins une portion du fluide relâché, le canal d'écoulement de fluide au moins au nombre de un ayant de multiples tronçons de canal s'étendant dans au moins deux directions et s'étendant essentiellement le long d'un plan de distribution de fluide, la portion au moins au nombre de un du fluide relâché s'écoulant à travers le canal d'écoulement de fluide au moins au nombre de un et vers la au moins une de l'entrée de fluide déchargé au moins au nombre de un en tant qu'au moins une portion du fluide déchargé,
dans lequel la première direction est essentiellement parallèle au plan de distribution de fluide, et la deuxième direction est essentiellement parallèle au plan de distribution de fluide.

2. Arrangement de plaques d'écoulement de fluide selon la revendication 1, dans lequel le canal d'écoulement de fluide au moins au nombre de un est couplé à un dispositif de pile à combustible pour générer de l'énergie électrique à partir d'une réaction avec la portion au moins au nombre de un du fluide relâché.

3. Arrangement de plaques d'écoulement de fluide selon la revendication 1, comprenant également :
un corps principal incluant au moins un du canal d'écoulement de fluide au moins au nombre de un dans le corps principal,
un premier élément de collecteur incluant le premier collecteur et la sortie de distribution au moins au nombre de un dans le premier élément de collecteur ; et
un deuxième élément de collecteur incluant le deuxième collecteur et l'entrée de fluide déchargé au moins au nombre de un dans le deuxième élément de collecteur,
dans lequel le corps principal est couplé entre les premier et deuxième éléments de collecteur.

4. Arrangement de plaques d'écoulement de fluide selon la revendication 3, dans lequel les premier et deuxième éléments de collecteur ont chacun une forme essentiellement longitudinale et une section transversale essentiellement ronde, le corps principal a une forme essentiellement plane, et les premier et deuxième éléments de collecteur sont placés sur des côtés opposés du corps principal.

5. Arrangement de plaques d'écoulement de fluide selon la revendication 1, comprenant également :
un corps principal incluant au moins un du canal d'écoulement de fluide au moins au nombre de un et au moins une de la sortie de distribution au moins au nombre de un et l'entrée de fluide déchargé au moins au nombre de un dans le corps principal,
un premier élément de collecteur incluant le premier collecteur dans le premier élément de collecteur ; et
un deuxième élément de collecteur incluant le deuxième collecteur dans le deuxième élément de collecteur,
dans lequel le corps principal est couplé entre les premier et deuxième éléments de collecteur.

6. Arrangement de plaques d'écoulement de fluide selon la revendication 5, dans lequel les premier et deuxième éléments de collecteur ont chacun une forme essentiellement longitudinale et une section transversale essentiellement ronde, le corps principal a une forme essentiellement plane, et les premier et deuxième éléments de collecteur sont placés sur des côtés opposés du corps principal.

7. Arrangement de plaques d'écoulement de fluide selon la revendication 1, dans lequel le canal d'écoulement de fluide au moins au nombre de un comprend une pluralité de canaux d'écoulement de fluide, et au moins certains de la pluralité de canaux d'écoulement de fluide sont agencés partiellement le long de la première direction et essentiellement le long du plan de distribution de fluide.

8. Arrangement de plaques d'écoulement de fluide selon la revendication 1, dans lequel une portion du premier collecteur comprend au moins un prolongement tubulaire couplé entre deux tronçons du premier collecteur.

9. Arrangement de plaques d'écoulement de fluide selon la revendication 1, dans lequel le deuxième collecteur reçoit au moins une portion du fluide déchargé à travers l'entrée de fluide déchargé au moins au nombre de un dans au moins une portion d'une région de paroi latérale du deuxième collecteur.

10. Système de pile à combustible ayant au moins un arrangement de plaques d'écoulement de fluide, l'arrangement de plaques d'écoulement de fluide comprenant :
un premier collecteur ayant une entrée de fluide pour recevoir un fluide entrant, le premier collecteur s'étendant le long d'une première direction et fournissant un canal pour transporter le fluide entrant partiellement le long de la première direction, le premier collecteur ayant au moins une ouverture formée dans au moins une portion d'une région de paroi latérale du premier collecteur, l'ouverture au moins au nombre de un formant au moins une sortie de distribution du premier collecteur,
dans lequel le premier collecteur relâche au moins une portion du fluide entrant en tant que fluide relâché à travers la sortie de distribution au moins au nombre de un, l'ouverture du premier collecteur correspondant à un angle de 70 à 85 degrés le long d'un tronçon circonférentiel d'une section transversale ronde du premier collecteur, l'angle étant défini par rapport à un point de référence de 0 degré placé sur un point inférieur et au point central de la section transversale ronde du premier collecteur ;
un deuxième collecteur ayant une sortie de fluide pour décharger un fluide déchargé, le fluide déchargé comprenant au moins une portion du fluide entrant, le deuxième collecteur s'étendant le long d'une deuxième direction et fournissant un canal pour transporter le fluide déchargé partiellement le long de la deuxième direction, le deuxième collecteur recevant le fluide déchargé à travers au moins une entrée de fluide déchargé sur le deuxième collecteur ;
au moins un canal d'écoulement de fluide couplé entre le premier collecteur et le deuxième collecteur et entre au moins une de la sortie de distribution au moins au nombre de un et au moins une de l'entrée de fluide déchargé au moins au nombre de un pour distribuer au moins une portion du fluide relâché, le canal d'écoulement de fluide au moins au nombre de un ayant de multiples tronçons de canal s'étendant dans au moins deux directions et s'étendant essentiellement le long d'un plan de distribution de fluide, la portion au moins au nombre de un du fluide relâché s'écoulant à travers le canal d'écoulement de fluide au moins au nombre de un et vers la au moins une de l'entrée de fluide déchargé au moins au nombre de un en tant qu'au moins une portion du fluide déchargé, le canal d'écoulement de fluide au moins au nombre de un étant couplé à une électrode de membrane échangeuse du système de pile à combustible,
dans lequel la première direction est essentiellement parallèle au plan de distribution de fluide, et la deuxième direction est essentiellement parallèle au plan de distribution de fluide.

11. Système de pile à combustible selon la revendication 10, comprenant également une couche de diffusion gazeuse couplée entre la membrane échangeuse et chaque canal d'écoulement de fluide.

12. Système de pile à combustible selon la revendication 10, comprenant également deux couches catalytiques, deux couches de diffusion gazeuse et deux canaux d'écoulement de fluide sur des côtés opposés de la membrane échangeuse pour générer de l'énergie électrique à partir d'une réaction de deux gaz s'écoulant à travers les deux canaux d'écoulement de fluide.

13. Système de pile à combustible selon la revendication 10, l'arrangement de plaques d'écoulement de fluide comprenant également :
un corps principal incluant au moins un du canal d'écoulement de fluide au moins au nombre de un dans le corps principal,
un premier élément de collecteur incluant le premier collecteur et la sortie de distribution au moins au nombre de un dans le premier élément de collecteur ; et
un deuxième élément de collecteur incluant le deuxième collecteur et l'entrée de fluide déchargé au moins au nombre de un dans le deuxième élément de collecteur,
dans lequel le corps principal est couplé entre les premier et deuxième éléments de collecteur.

14. Système de pile à combustible selon la revendication 10, l'arrangement de plaques d'écoulement de fluide comprenant également :
un corps principal incluant au moins un du canal d'écoulement de fluide au moins au nombre de un et au moins une de la sortie de distribution au moins au nombre de un et l'entrée de fluide déchargé au moins au nombre de un dans le corps principal,
un premier élément de collecteur incluant le premier collecteur dans le premier élément de collecteur ; et
un deuxième élément de collecteur incluant le deuxième collecteur dans le deuxième élément de collecteur,
dans lequel le corps principal est couplé entre les premier et deuxième éléments de collecteur.

15. Système de pile à combustible selon la revendication 10, dans lequel le canal d'écoulement de fluide au moins au nombre de un comprend une pluralité de canaux d'écoulement de fluide, et au moins certains de la pluralité de canaux d'écoulement de fluide sont agencés partiellement le long de la première direction et essentiellement le long du plan de distribution de fluide.

16. Système de pile à combustible selon la revendication 10, dans lequel le deuxième collecteur reçoit au moins une portion du fluide déchargé à travers l'entrée de fluide déchargé au moins au nombre de un dans au moins une portion d'une région de paroi latérale du deuxième collecteur.
